# EUROPEAN PATENT SPECIFICATION

(11) **EP 4 536 593 B1**
(45) Date of publication and mention of the grant of the patent: **20.05.2026**
(21) Application number: 23731679.9
(22) Date of filing: 09.06.2023
(51) Int. Cl.: C01G 51/10, C01G 53/10, C01G 53/11, C22B 3/26, C22B 3/42, C22B 3/00, C01G 51/00, C22B 23/00, C22B 7/00

(54) **PROCESS FOR METAL SULPHIDATION**
VERFAHREN ZUR METALLSULFIDIERUNG
PROCÉDÉ DE SULFURATION DE MÉTAUX

(30) Priority: 10.06.2022 EP 22178470; 13.06.2022 EP 22178675
(43) Date of publication of application: 16.04.2025
(73) Proprietor: Umicore, 1000 Brussels (BE)
(72) Inventor: VERHEES, Pieter, 2250 Olen (BE)
(74) Representative: Umicore RDI Patent Department
(86) International application number: PCT/EP2023/065444
(87) International publication number: WO 2023/237716

(56) References cited:
- EP-A1- 3 266 885
- WO-A1-2011/036345
- GB-A- 1 006 525
- US-A1- 2006 228 279
- US-B1- 6 391 089

## Description

### TECHNICAL FIELD

The present invention relates to a process for processing a metal-containing feed comprising at least one Ni compound and/or at least one Co compound, said feed further comprising impurities.

### INTRODUCTION

Nickel is an important industrial metal which finds primarily applications in stainless steel production, nonferrous corrosion-resistant alloys, electroplating, alloy steel. High purity nickel is essential for developing different applications. Nickel having a purity above 98% can be obtained from refining nickel ore resources such as nickel sulphide ore and nickel oxide ore. Often, these ores also comprise an amount of iron. Also, cobalt is an important industrial metal with uses primarily in alloys, battery materials, catalyst materials and pigments.

As the availability of high purity nickel resources is decreasing, new processes and refineries for purifying nickel containing materials are required. Likewise, sourcing of cobalt is constrained by limited natural occurrence and availability primarily in politically unstable regions. Such nickel and cobalt refineries will need to allow for high capacities and high efficiency of the processes to yield elemental nickel and/or cobalt, or a nickel and/or cobalt compound in a desired quantity and high purity. Amongst other processes, the sulphidation of Ni and/or Co from laterite ore or battery scrap materials is considered one of the more promising routes.

In this respect, Liu S. et al. provide an effective way for a robust recovery of Ni from laterite ore by H₂ reduction using sodium thiosulfate (Na₂S₂O₃) as a promoter. It was found that a Ni content of 9.97% and a Ni recovery of 99.24% were achieved with 20 wt.% Na₂S₂O₃ at 1100°C, Liu S. et al. (2021) A Robust Recovery of Ni From Laterite Ore Promoted by Sodium Thiosulfate Through Hydrogen-Thermal Reduction. Front. Chem. 9:704012. doi: 10.3389/fchem.2021.704012.

CN 113 802 002 discloses a method for recycling valuable metals in a lithium battery through a wet process. According to the method, waste lithium battery powder is selectively leached under the condition that hydrogen sulphide gas is pressurized and introduced, so that Mn, Li and Al metal ions enter a first-stage leaching solution, nickel, cobalt, copper and iron exist in first-stage leaching residues in the form of sulphides, only a small amount of sulfuric acid is consumed in the process, then the pH value of the first-stage leaching solution is adjusted to remove aluminium and manganese. Subsequent to the first-stage leaching process, the method requires an elaborate purification procedure to obtain high-purity Ni.

US 2006/228279 A1, GB 1 006 525 A, US 6 391 089 B1, WO 2011/036345 A1 and EP 3 266 885 A1 disclose the recovery of nickel and/or cobalt from their ores, spent batteries or other waste materials in the form of their sulphides, comprising the steps of forming an aqueous metal sulphate solution by reacting sulphuric acid with a raw material feed comprising nickel and/ or cobalt in water, reacting at least a portion of said metal sulphate with hydrogen sulphide in an acidic aqueous medium, thereby obtaining a slurry consisting of a solid phase comprising a metal sulphide precipitate and an aqueous phase comprising one or more impurities and sulphuric acid, and separating said solid phase and said aqueous phase, thereby obtaining a solid phase comprising a metal sulphide and an aqueous phase.

Yet, novel processes are required to afford the nickel and/or cobalt in high purity and in high efficiency in use of energy and materials.

### SUMMARY

The current invention provides in a solution for at least one of the above mentioned problems by providing a process for processing a metal-containing feed according to claim 1. The sulphidation reaction in step iv. of the process proceeds advantageously in presence of a mineral acid. Such a mineral acid may be added as such, or may be produced *in situ* from the reaction of NiSO₄, NiCl₂, CoSO₄ or CoCl₂ with a sulphidizing agent such as hydrogen sulphide in the aqueous reaction medium. Advantageously, according to such an embodiment, the total amount of Co and/or Ni in the aqueous medium is increased which allows for improved recovery efficiency. The process is sufficiently robust to cope with Co and/or Ni containing solutions from impure waste streams. In an especially preferred embodiment, the mineral acid is produced *in situ* by introducing a NiSO₄ or CoSO₄ containing bleed obtained from a NiSO₄ crystallizing unit or from a CoSO₄ crystallizing unit, respectively, or from a mixed sulphate crystallizing unit.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention. As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise," "comprising," and "comprises" and "comprised of" as used herein are synonymous with "include", "including", "includes" or "contain", "containing", "contains" and are inclusive or open-ended terms that specifies the presence of what follows, e.g., component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints. All percentages are to be understood as percentage by weight, abbreviated as "wt.%" or as volume per cent, abbreviated as "vol.%", unless otherwise defined or unless a different meaning is obvious to the person skilled in the art from its use and in the context wherein it is used. Unless otherwise indicated, wt.% of an element or compound is calculated relative to the dry weight of the compound or composition comprising said element or compound.

In the context of the present invention, the term "raw material feed" refers to one or more feedstocks that comprises any one or a combination of nickel, cobalt, manganese, or lithium. In some embodiments, said raw material feed may comprise any one or combination of raw materials and recycled materials. Examples of raw materials include, but are not limited to, mixed hydroxide precipitates (MHP), mixed sulphide precipitates (MSP), nickel sulphide concentrate, cobalt sulphide concentrate, nickel laterite, nickel matte, or ferronickel. Examples of recycled materials include, but are not limited to, spent cathode material, and material derived from recycled lithium ion batteries or lithium ion battery manufacturing scrap (collectively, referred to herein as black mass).

In the context of the present invention, the term "MHP" is to be considered as an abbreviation of the term "mixed hydroxide precipitate." Mixed hydroxide precipitate (MHP) is an intermediate product of nickel metallurgy derived from processing laterite ores which contains primarily nickel and a minor amount of cobalt. MHP is a solid product which is typically prepared by extracting nickel and cobalt from laterite ores. Alternatively or additionally, MHP may be obtained from nickel and/or cobalt containing hydroxide materials produced as production waste during preparation of cathode materials or obtained from battery recycling processes.

In the context of the present invention, the term "CHIP" is to be considered as an abbreviation of the term "cobalt hydroxide intermediate precipitate." Cobalt hydroxide intermediate is comprised primarily of cobalt, and typically has a cobalt content of 25 wt.% to 40 wt.%, relative to the total weight of said intermediate product. Typically, said CHIP comprises a significant amount of nickel. CHIP's are known to have a very low amount of impurities, which render them attractive for processes according to the present invention.

In the context of the present invention, the term "solid metal-containing feed," specifically said solid metal-containing feed which is fed to the process in step iv., refers to a solid feed comprising an MHP product, a CHIP product, or a mixture of two or more MHP products, two or more CHP products, or a mixture of one or more MHP products and one or more CHIP products. Preferably, said metal-containing feed comprises at least one Ni compound and/or at least one Co compound. Preferably, said Ni compound and said Co compound are comprised as a Ni (II) compound and as a Co (II) compound, respectively. Yet, said Ni compound and said Co compound may also be comprised in higher oxidation states such as 3+ or 4+, or said metal-containing feed may comprise a mixture of Ni and/or Co compounds in oxidation state 2+ and in oxidation state 3+ and/or 4+.

In the context of the present invention, the term "continuous process" is to be considered as a process in which the produced solution has a substantially constant composition. Specifically, a continuous process is a process in which the produced solution has a constant composition within the range of what are considered normal process variations. More specifically, the produced solution has a composition whereby the concentration of each ingredient is within the range of +/-20% or less, preferably +/-10% or less, more preferably +/-5% or less, even more preferably +/-3% or less of its average concentration. In a preferred embodiment, the present invention provides a continuous process which operates under steady-state conditions.

In the context of the present invention, the term "aqueous medium" is used for a water-based solution. The aqueous medium facilitates the handling of the contents of the reactor, such as mixing or pumping. The aqueous medium may already contain some of the other ingredients taking part in the reaction, or those can be added later. Said aqueous medium may in particular contain the mineral acid.

Preferably, a mineral acid, such as sulphuric acid or hydrochloric acid, is intermittently or gradually fed to the process according to the present invention. Said solid metal-containing feed may be fed intermittently or gradually to the process. Yet, said solid metal-containing feed is preferably fed in the initial phase of the process only.

The sulphidising agent used in the sulphidation reaction of step iv. should obviously be susceptible to react with Co and/or Ni oxides. Suitable sulphidising agents should therefore preferably be at least partially soluble in the aqueous medium. Preferably, a sulphidising agent, such as H₂S or NaHS, is fed to the process according to the present invention at a substantially constant concentration and flow rate. Preferably, the feed rate of said sulphidising agent to the process is controlled within the range of +/-20% or less, preferably +/-10% or less, more preferably +/-5% or less, even more preferably +/-3% or less of its feed rate.

In a first aspect, the present invention provides a process for generating a metal sulphide comprising nickel and/or cobalt, said process comprising the steps of:
i. forming an aqueous metal sulphate solution by reacting sulphuric acid with a raw material feed comprising nickel and/or cobalt in water;
ii. crystallizing said metal sulphate from said aqueous metal sulphate solution to form a crystallized metal sulphate in a mother liquor, the mother liquor comprising an uncrystallized metal sulphate;
iii. separating said crystallized metal sulphate from said mother liquor;
iv. reacting at least a portion of said uncrystallized metal sulphate with a sulphidizing agent, preferably hydrogen sulphide, in an acidic aqueous medium, thereby obtaining a slurry consisting of a solid phase comprising a metal sulphide precipitate and an aqueous phase comprising one or more impurities and sulphuric acid; and
v. separating said solid phase and said aqueous phase, thereby obtaining a solid phase comprising a metal sulphide and an aqueous phase.

In a preferred embodiment, the present invention provides a process according to the first aspect of the invention, whereby said aqueous medium in step iv. further comprises a solid metal-containing feed comprising a nickel compound and/or a cobalt compound. Preferably, said solid metal-containing feed is provided as a solid or as a slurry, i.e. a solid in aqueous medium. Preferably, said solid metal-containing feed is comprised of a MHP material and/or a CHIP material. In one embodiment, said raw material feed consumed in step i. may have the same composition as said solid metal-containing feed. In a preferred embodiment, the present invention provides a process according to the first aspect of the invention, further comprising the step of adding a basic salt of Li, Na, K, Ca, Mg, Al, Fe, B, Mn, W and/or U to said aqueous medium in step iv. Suitable basic salts are, but not limited to, MHP, CHIP, Mn carbonate, Mg oxide, battery scrap material, etc.

The sulphidation reaction in step iv. generates a mineral acid, which mineral acid can advantageously be used to realize concomitantly a leaching of impurities in the solid metal-containing feed. E.g., Na or K impurities may be leached with sulfuric acid to generate the water soluble Na or K sulphate salts, respectively. Such a mineral acid may also be added as such to stimulate the leaching of impurities, or may be produced *in situ* from the reaction of NiSO₄, NiCl₂, CoSO₄ or CoCl₂ with a sulphidizing agent such as hydrogen sulphide in the aqueous reaction medium, according to one or more of the following reactions:

*NiSO*₄ (*aq*) + *H*₂*S* (*g*) → *NiS* (*s*) *+ H*₂*SO*₄

*NiCl*₂ (*aq*) + *H*₂*S* (*g*) → *NiS* (*s*) *+* 2 *HCl*

*CoSO*₄ (*aq*) + *H*₂*S* (*g*) → *CoS* (*s*) + *H*₂*SO*₄

*CoCl*₂ (*aq*) *+ H*₂*S* (*g*) → *CoS* (*s*) *+* 2 *HCl*

Likewise, phosphate salts, nitrate salts, etc. of Ni and/or Co may be used for generating a mineral acid *in situ.* Upon contact of NiSO₄ or NiCl₂ with H₂S, the sulphidised metals, e.g., NiS and/or CoS, precipitate and the mineral acid, sulphuric acid or hydrochloric acid, respectively, is produced *in situ.* Advantageously, according to such an embodiment, the total amount of Co and/or Ni in the aqueous medium is increased which allows for improved recovery efficiency. The process is sufficiently robust to cope with Co and/or Ni containing solutions from impure waste streams. In an especially preferred embodiment, the mineral acid is produced *in situ* by introducing a NiSO₄ or CoSO₄ containing bleed obtained from a NiSO₄ crystallizing unit or from a CoSO₄ crystallizing unit, respectively, or from a mixed sulphate crystallizing unit.

In a preferred embodiment, the present invention provides a process according to the first aspect of the invention, whereby said metal sulphide precipitate obtained in step iv. is subsequently leached with an acid and/or with an oxidizing agent to regenerate hydrogen sulphide, and whereby the regenerated hydrogen sulphide is used in step iv.

In a preferred embodiment, the present invention provides a process according to the first aspect of the invention, whereby said uncrystallized metal sulphate is reacted with hydrogen sulphide in step iv. at a temperature between 25°C and 80°C, preferably between 40°C and 80°C, and more preferably at a temperature of about 60°C.

In a preferred embodiment, the present invention provides a process according to the first aspect of the invention, whereby said uncrystallized metal sulphate is reacted with hydrogen sulphide in step iv. at atmospheric pressure.

In a preferred embodiment, the present invention provides a process according to the first aspect of the invention, whereby at least a portion of said uncrystallized metal sulphate is reacted with hydrogen sulphide in step iv. in an acidic aqueous medium at a pH between 1.5 and 10, preferably at a pH between 1.5 and 6, and more preferably at a pH between 3 and 6. Preferably, said acidic aqueous medium comprises sulphuric acid.

In a preferred embodiment, the present invention provides a process according to the first aspect of the invention, whereby prior to step ii. the amount of impurities in said aqueous metal sulphate solution is reduced by precipitation, ion exchange and/or extraction of impurities from said aqueous metal sulphate solution. Preferably, at least a portion of said mother liquor obtained in step iii. is basified to form a basic metal salt. Preferably, said basic metal salt is used in one or more of the aforementioned steps of precipitation, ion exchange and extraction, such as for the preparation of a nickel and/or cobalt pre-loaded extractant.

In a preferred embodiment, the present invention provides a process according to the first aspect of the invention, whereby step iv. comprises the step of reacting said solid metal-containing feed in an aqueous medium at a pH between 1.5 and 10 with a sulphidising agent, thereby obtaining a slurry comprising a Ni- and/or Co-enriched solid phase and an aqueous phase comprising one or more water-soluble salts of Li, Mn, Mg, Al, Fe, Ca, B, Na and/or U. The pH of said aqueous medium can be controlled by adding a mineral acid such as sulphuric acid or hydrochloric acid. Preferably, the present invention provides a process whereby said solid metal-containing feed is first reacted in step iv. with a sulphidising agent at a pH between 3.0 and 10, and whereby the pH of said aqueous medium is subsequently lowered to a pH below 3.0. A first sulphidation at a pH up to 10 is advantageous, as sulphidation proceeds kinetically faster at higher pH, preferably at a pH of 6.5 to 8.0. Moreover, at higher pH impurities such as Na, Mg and Ca can already be removed from the feed material. Lowering said pH in a second sulphidation step to a value below 3.0, preferably below 2.5, was found advantageous to dissolve all impurities such as Fe, Al, Si and U. More preferably, said pH of said aqueous medium is lowered to a pH between 1.5 and 2.5. Lowering said pH further to a pH value below 1.5 is equally possible. Preferably, the sulphidation reaction of step iv. is performed in a closed-type reactor to avoid the emanation of hazardous gases. Preferably, the reactor off-gas is recycled to the feed of the reactor.

In a preferred embodiment, the present invention provides a process according to the first aspect of the invention, whereby the volumetric ratio φ_{AC} of mineral acid in said aqueous medium at a pH between 3 and 10, and mineral acid in said aqueous medium at a pH below 3.0 is between 0.0 and 0.95. Preferably, said ratio φ_{AC} is between 0.10 and 0.95, and more preferably said ration φ_{AC} is about 0.80, 0.85, 0.90 or 0.95, or any value there in between.

Thus, it is also anticipated to provide a process which allows to selectively leach impurities such as Li, Mg and Mn from a feed material comprising Ni and/or Co. Other impurities typically included in such solid metal-containing feed include, but are not limited to, Al, Fe, Ca, B, Na and U. Other impurities such as, but not limited to, Zn and Cu do not form water-soluble salts under the circumstances of the process and therefore tend to remain in the solid phase. Such impurities may be separated from said Ni and/or said Co in refining processes according to the state of the art. Furthermore, organic carbon present in the metal feed may be washed out as a water-soluble compound, and will be collected in the aqueous phase.

Generally, refining process flowsheets for Ni and/or Co MHP and/or CHIP refining rely on the extraction of impurities such as Mn and Mg from solution. The current process offers an alternative way to remove Mg and Mn from Ni.

Other elements that are also removed through the formation of a water-soluble salt are Al, Fe, U, Na, B, Ca and U. Numerous further impurities that may be present in the feed material, such as F, W, Si, P, C, K, Fe, Cl, SO₄, and will be collected in the aqueous phase. Other impurities such as Cu, Zn, Pb, and Cd will report to the solid residue. The production of the solid residue comprising the Co and/or Ni sulphides depleted in Mn has several advantages for the hydrometallurgical refining process. It allows for more intensive processes as Mn does not dilute the Ni- and/or Co-bearing solution and the need to isolate Mn, e.g., by solvent extraction is avoided.

In a preferred embodiment, the present invention provides a process according to the first aspect of the invention, whereby said solid phase comprising Ni (II) sulphide and/or Co (II) sulphide obtained in step ii. is leached with an acid and/or an oxidizing agent such as, but not limited to, O₂ or Cl₂. As such, a highly pure Ni salt and/or Co salt solution can be obtained while the sulphidising agent can be regenerated and can be recycled to step iv. of the inventive process. Leaching of NiS and CoS with an acid leads to the formation of a Ni salt and a Co salt, respectively, and to the formation of H₂S. E.g., reaction of NiS with sulphuric acid leads to the formation of NiSO₄ and H₂S, which can advantageously be recycled as a sulphidizing agent in step iv. Likewise, reaction of NiS with oxygen and HCl, or with chlorine gas leads to the formation of NiCl₂ and S. S can advantageously be reduced to provide a sulphidizing agent such as H₂S which can be recycled as a sulphidizing agent in step iv.

In a preferred embodiment, the present invention provides a process according to the first aspect of the invention, whereby said solid metal-containing feed in said aqueous medium is first reacted in step iv. with said sulphidising agent at a pH between 3.0 and 4.5. It was found that a lower pH favours the leaching of impurities from the solid metal-containing feed and fast process kinetics. Yet, sulphidation at a too low pH is not sufficiently selective. The inventors have found that optimal process conditions were obtained when a first sulphidation reaction was performed at a pH of about 3.0 to 4.5. Preferably, the first sulphidation step is performed for a processing time of 2 to 16 hours, preferably 4 to 12 hours, more preferably 4 to 10 hours.

In a preferred embodiment, the present invention provides a method according to the first aspect of the invention, whereby after reacting said metal-containing feed at a pH between 3.0 and 10, the pH of said aqueous medium is lowered to a pH between 1.5 and 3.0. It was found that lowering the pH favours the faster process kinetics. It was also found that lowering the pH below 1.5 further improves removal of impurities, yet it does not sufficiently recompense the cost of mineral acid consumption in the process. The inventors have found that optimal process conditions were obtained when the second sulphidation reaction was performed at a pH of about 2.0 to 3.0, most preferably at a pH of 2.1, 2.2, 2.3, 2.4 or 2.5 or any value there in between. Preferably, the second sulphidation step is performed for a processing time of 0.5 to 8 hours, preferably 1 to 4 hours, more preferably 1 hour, 2 hours, 3 hours or 4 hours or any period there in between.

A multi-step process is advantageous where most of the process is performed at a pH between 3.2 and 6.0, or even between 3.5 and 6.0, while in the second or any subsequent addition step the pH is lowered to between 1.5 and 3. Sulphide formation kinetics are favoured at higher pH. For that reason, it is advantageous to perform most of the process at relatively high pH since sulphide formation is the rate limiting step. The lower pH in the second or any subsequent addition step is selected to maximize the dissolution of Mn, and other impurities. After every such addition step, optionally, a solid-liquid separation can be performed. Most of the conversion to sulphides is usually performed in the first reaction step and then completed with the second or any subsequent addition step. Since sulphide formation will not occur at a pH below 1, the process must be completed at a pH between 1 and 5. Working at a pH above the upper limit would result in an insufficient dissolution of Mn.

After completion of the process, the pH may be further lowered to below 1.5 in order to maximize impurity removal. Indeed, while the formed metal sulphides will not redissolve in absence of an oxidizing agent, some impurities can be eliminated from the residue.

The solid residue containing the major part of the Co and/or Ni as Co and/or Ni sulphides, obtained in the step v. of separating the solids from the solution, can be further treated in different ways. Hydrometallurgical treatment of the solid residue is a preferred option.

A further embodiment describes therefore a process, in which the solid residue is used as starting material in a subsequent hydrometallurgical refining process. The hydrometallurgical refining process comprises the steps of:
- leaching the solid residue comprising the Co and/or Ni sulphides with a mineral acid, preferably H₂SO₄, thereby obtaining a Ni- and/or Co-bearing solution;
- under the provision that insoluble solids remain, separating the solution from said solids; and,
- crystallizing Ni and/or Co from the Ni- and/or Co-bearing solution, preferably as Ni and/or Co sulphate.

In a preferred embodiment, the present invention provides a process according to the first aspect of the invention, whereby said solid metal-containing feed is reacted with said sulphidising agent in step iv. at a temperature between 20°C and 80°C, preferably between 25°C and 80°C. Preferably, said feed is reacted with said sulphidation agent at a substantially constant temperature. Since the reaction is moderately exothermic, only heating may be required in the initial stage of the process. In a preferred embodiment, the temperature is controlled to a temperature below 80°C, preferably to a temperature of between 40°C and 80°C, and more preferably at a temperature of about 60°C. Ensuring that the reaction temperature is not too high allows for enhanced solubility of H₂S in the aqueous medium, and consequently favours sulphidation reaction kinetics.

In a preferred embodiment, the present invention provides a process according to the first aspect of the invention, whereby said solid metal-containing feed is reacted with said sulphidising agent in step iv. at atmospheric pressure, i.e., at 1 bar, or at an underpressure of less than 0.3 bar, preferably less than 0.2 bar, and more preferably less than 0.1 bar. Working at underpressure conditions ensures that H₂S used in the process does not leak to the environment. Preferably, said process proceeds under an atmosphere devoid of oxygen or air. In a preferred embodiment, the gaseous atmosphere above the aqueous medium is flushed with an inert gas, such as N₂. Performing the process in absence of oxidizing agents such as oxygen and air avoids the unwanted oxidation of nickel- and/or cobalt sulphides.

In a preferred embodiment, the present invention provides a process according to the first aspect of the invention, whereby hydrogen sulphide in step iv. is replaced with NaHS, KHS or LiHS. H₂S and NaHS are the preferred sources of sulphides. Most preferably, said sulphidising agent comprises H₂S. H₂S can be introduced in the aqueous medium as such or may be generated *in situ* by adding elemental sulphur under reducing conditions, more specifically in presence of H₂. In the current invention, the sulphidising agents not only act as precipitation agent to form metal sulphides, but advantageously also as reducing agent for higher valent metals in oxidation states such as 3+ or 4+. The amount of added sulphidising agent is preferably sufficient to saturate the slurry in H₂S. The saturation is easily verified by monitoring the absorption rate of H₂S by the reacting mixture. Saturation provides for optimal kinetics. Alternatively or additionally, NaHS may be introduced as a sulphidising agent. Ammonium sulphide can also be used.

Suitable sulphidising agents should preferably be at least partially soluble in the aqueous medium. For example, Li₂S reacts with the slurry to form a soluble Li salt and a soluble sulphide. On the other hand, sulphides which are insoluble under the described conditions, for example CuS, are not considered a suitable source of sulphides, respectively a sulphidising agent according to the invention.

The mineral acid is preferably chosen from the list consisting of H₂SO₄, HCl, H₃PO₄, and HNO₃, or mixtures thereof. In a preferred embodiment, the present invention provides a process according to the first aspect of the invention, whereby said mineral acid is sulphuric acid. Alternatively, said mineral acid may be hydrochloric acid.

In a preferred embodiment, the present invention provides a process according to the first aspect of the invention, whereby said process is a continuous process. Specifically, said process is performed under continuous flow conditions.

In a preferred embodiment, the present invention provides a process according to the first aspect of the invention, whereby said solid metal-containing feed in step iv. comprises Ni and/or Co in an amount of a 5 to 75 wt.%, relative to the total weight of said solid metal-containing feed, preferably in an amount of 10 to 65 wt.%. Preferably, said solid metal-containing feed comprises Ni and/or Co in an amount of a 20 to 60 wt.%, such as in an amount of 30 to 50 wt.%.

In an alternative embodiment, the present invention provides a process according to the first aspect of the invention, whereby said solid metal-containing feed in step iv. comprises battery materials which are devoid of lithium, such as non-lithiated production waste materials obtained from battery production, or partially recycled battery materials which have been stripped from its lithium content. Besides oxides of Co and/or Ni, a typical battery scrap-based feed may also contain anode materials such as carbon, electrode foils, and electrolytes. Preferably, at least a predominant part of Co and/or Ni contained in the feed is in the form of their respective metallic oxides, more preferably at least 80%, most preferably at least 90%, by weight. The remainder may comprise Co and/or Ni in metallic form.

In a preferred embodiment, the present invention provides a process according to the first aspect of the invention, whereby said solid metal-containing feed in step iv. comprises Ni in an amount of a 10 to 70 wt.%, relative to the total weight of said solid metal-containing feed, preferably in an amount of 20 to 60 wt.%, and more preferably in an amount of 30 to 55 wt.%. Preferably, said solid metal-containing feed further comprises Co in an amount of a 0.5 to 15 wt.%, relative to the total weight of said solid metal-containing feed, preferably in an amount of 1 to 10 wt.%, more preferably in an amount of 1 to 5 wt.%.

In a preferred embodiment, the present invention provides a process according to the first aspect of the invention, whereby said Ni compound and/or said Co compound present in said solid metal-containing feed in step iv. are in oxidation state 2+. Yet, the inventive process also allows for said Ni compound and said Co compound to also comprise compounds in higher oxidation states such as 3+ or 4+. Preferably, said compounds are water-insoluble compounds. Advantageously, it was found that under the reaction conditions of the present invention, Ni and/or Co metal compounds having a higher oxidation state are efficiently reduced by the sulphidising agent, preferably H₂S, during the first step of the inventive process.

In a preferred embodiment, the present invention provides a process according to the first aspect of the invention, whereby said Ni compound and/or at least one Co compound in said solid metal-containing feed in step iv. comprise a carbonate, a hydroxycarbonate, a sulphate, a sulphite, a phosphate, a hydroxide, and/or an oxide. Preferably, said Ni compound and/or at least one Co compound in said solid metal-containing feed are comprised of a hydroxycarbonate, a hydroxide and/or an oxide, most preferably of a hydroxycarbonate and/or a hydroxide.

In a preferred embodiment, the present invention provides a process according to the first aspect of the invention, whereby said solid metal-containing feed in step iv. comprises Mn in an amount of a 1 to 15 wt.%, relative to the total weight of said solid metal-containing feed, preferably in an amount of 3 to 10 wt.%.

In a preferred embodiment, the present invention provides a process according to the first aspect of the invention, whereby said solid metal-containing feed in step iv. comprises Mg in an amount of a 0.1 to 10 wt.%, relative to the total weight of said solid metal-containing feed, preferably in an amount of 1 to 7 wt.%.

In a preferred embodiment, the present invention provides a process according to the first aspect of the invention, whereby said solid metal-containing feed in step iv. comprises Al in an amount of a 0.01 to 2.00 wt.%, relative to the total weight of said solid metal-containing feed, preferably in an amount of 0.02 to 1.50 wt.%.

In a preferred embodiment, the present invention provides a process according to the first aspect of the invention, whereby said solid metal-containing feed in step iv. further comprises Cu in an amount of 0.01 to 0.20 wt.%, relative to the total weight of said solid metal-containing feed, and/or Zn in an amount of 0.2 to 1.0 wt.%, relative to the total weight of said solid metal-containing feed.

In a preferred embodiment, the present invention provides a process according to the first aspect of the invention, whereby said solid metal-containing feed in step iv. is a powder, said powder preferably having a D50 of less than 100 µm, as determined according to ASTM B822-97 Standard Test Method for Particle Size Distribution of Metal Powders and Related Compounds by Light Scattering, American Society for Testing and Materials, West Conshohocken, PA (1997). ASTM B822-97 is an ASTM standard test method for size determination of particulate metals and compounds by laser diffraction. Preferably, said powder preferably has a D50 of less than 50 µm, more preferably less than 30 µm, and more than 0.1 µm, more preferably more than 1 µm. The metal oxides are better accessible for reactions when present in form of a powder. An average particle size of less than 100 µm, less than 50 µm, or even less than 30 µm is therefore preferred in an industrial setup. It is not required that such a powder is a dry powder, it could as well originate from a wet process, for example a filter cake. This is particularly advantageous as it has been found that the formation of Ni and Co sulphide is the rate-determining step.

In a further embodiment, the process according to the first aspect of the invention is performed in a continuous operation. In such a setup, the feed and acid are added continuously to the reactor while the slurry is extracted from the reactor. The addition and extraction can also be performed batchwise, e.g., repeatedly, every 30 minutes. Continuous operation has several advantages. Firstly, continuous operation intensifies the use of reactor equipment. Secondly, the quality of the solid Co and/or Ni sulphides is more consistent since they are formed in a steady state regime. This facilitates further refining. In an alternative embodiment, the process according to the first aspect of the invention is performed in a batch operation. In such an operation, the first stage of the sulphidation process at a pH between 3.0 and 10.0 is performed in a first reactor, and the second stage of the process at a pH below 3.0 is performed in a second, separate reactor.

## Claims

1. Process for generating a metal sulphide comprising nickel and/or cobalt, said process comprising the steps of:
i. forming an aqueous metal sulphate solution by reacting sulphuric acid with a raw material feed comprising nickel and/or cobalt in water;
ii. crystallizing said metal sulphate from said aqueous metal sulphate solution to form a crystallized metal sulphate in a mother liquor, the mother liquor comprising an uncrystallized metal sulphate;
iii. separating said crystallized metal sulphate from said mother liquor;
iv. reacting at least a portion of said uncrystallized metal sulphate with a sulphidizing agent in an acidic aqueous medium, thereby obtaining a slurry consisting of a solid phase comprising a metal sulphide precipitate and an aqueous phase comprising one or more impurities and sulphuric acid; and
v. separating said solid phase and said aqueous phase, thereby obtaining a solid phase comprising a metal sulphide and an aqueous phase,
whereby said aqueous medium in step iv. further comprises a solid metal-containing feed comprising a nickel compound and/or a cobalt compound.

2. Process according to claim 1, further comprising the step of adding a basic salt of Li, Na, K, Ca, Mg, Al, Fe, B, Mn, W and/or U to said aqueous medium in step iv.

3. Process according to claim 1 or 2, whereby said metal sulphide precipitate obtained in step iv. is subsequently leached with an acid and/or with an oxidizing agent to regenerate hydrogen sulphide, and whereby the regenerated hydrogen sulphide is used in step iv.

4. Process according to any of claims 1 to 3, whereby said uncrystallized metal sulphate is reacted with a sulphidizing agent in step iv. at a temperature between 40°C and 80°C.

5. Process according to any of claims 1 to 4, whereby said uncrystallized metal sulphate is reacted with a sulphidizing agent in step iv. at atmospheric pressure.

6. Process according to any of claims 1 to 5, whereby at least a portion of said uncrystallized metal sulphate is reacted with a sulphidizing agent in step iv. in an aqueous medium at a pH between 1.5 and 10.

7. Process according to claim 6, whereby sulphuric acid is added in step iv. to said aqueous medium.

8. Process according to any of claims 1 to 7, whereby prior to step ii. the amount of impurities in said aqueous metal sulphate solution is reduced by precipitation, ion exchange and/or extraction of impurities from said aqueous metal sulphate solution.

9. Process according to any of claims 1 to 8, whereby said solid metal-containing feed in step iv. comprises Ni and/or Co in an amount of a 5 to 75 wt.%, relative to the total weight of said solid metal-containing feed.

10. Process according to any of claims 1 to 9, whereby Ni and/or Co in said solid metal-containing feed in step iv. are comprised as a carbonate, a hydroxycarbonate, a sulphate, a phosphate, a hydroxide, and/or an oxide.

11. Process according to any of claims 1 to 10, whereby said solid metal-containing feed in step iv. comprises Mn in an amount of a 1 to 15 wt.%, relative to the total weight of said solid metal-containing feed.

12. Process according to any of claims 1 to 11, whereby said solid metal-containing feed in step iv. comprises Mg in an amount of a 0.1 to 10 wt.%, relative to the total weight of said solid metal-containing feed.

13. Process according to any of claims 1 to 12, whereby said solid metal-containing feed in step iv. comprises Al in an amount of a 0.01 to 2.00 wt.%, relative to the total weight of said solid metal-containing feed.

14. Process according to any of claims 1 to 13, whereby said solid metal-containing feed in step iv. further comprises Cu in an amount of 0.01 to 0.20 wt.%, relative to the total weight of said solid metal-containing feed, and/or Zn in an amount of 0.2 to 1.0 wt.%, relative to the total weight of said solid metal-containing feed.

15. Process according to any of claims 1 to 14, whereby said solid metal-containing feed in step iv. is a powder having an average particle size D50 of between 0.1 and 100 µm, as determined according to ASTM B822-97.

## Patentansprüche

1. Verfahren zur Erzeugung eines Metallsulfids, das Nickel und/oder Cobalt umfasst, wobei das Verfahren die folgenden Schritte umfasst:
i. Bilden einer wässrigen Metallsulfatlösung durch Umsetzen von Schwefelsäure mit einem Ausgangsmaterialeintrag, der Nickel und/oder Cobalt umfasst, in Wasser;
ii. Kristallisieren des Metallsulfats aus der wässrigen Metallsulfatlösung, um ein kristallisiertes Metallsulfat in einer Mutterlauge zu bilden, wobei die Mutterlauge ein nicht kristallisiertes Metallsulfat umfasst;
iii. Abtrennen des kristallisierten Metallsulfats von der Mutterlauge;
iv. Umsetzen mindestens eines Teils des nicht kristallisierten Metallsulfats mit einem Sulfidierungsmittel in einem sauren wässrigen Medium, wodurch eine Aufschlämmung erhalten wird, die aus einer festen Phase, die eine Metallsulfidausfällung umfasst, und einer wässrigen Phase, die eine oder mehrere Verunreinigungen und Schwefelsäure umfasst, besteht; und
v. Trennen der festen Phase und der wässrigen Phase, wodurch eine feste Phase, die ein Metallsulfid umfasst, und eine wässrige Phase erhalten werden,
wobei das wässrige Medium in Schritt iv. ferner einen festen metallhaltigen Eintrag umfasst, der eine Nickelverbindung und/oder eine Cobaltverbindung umfasst.

2. Verfahren nach Anspruch 1, ferner umfassend den Schritt des Zugebens eines basischen Salzes von Li, Na, K, Ca, Mg, Al, Fe, B, Mn, W und/oder U zu dem wässrigen Medium in Schritt iv.

3. Verfahren nach Anspruch 1 oder 2, wobei die in Schritt iv. erhaltene Metallsulfidausfällung anschließend mit einer Säure und/oder einem Oxidierungsmittel ausgelaugt wird, um Wasserstoffsulfid zu regenerieren, und wobei das regenerierte Wasserstoffsulfid in Schritt iv. verwendet wird.

4. Verfahren nach einem der Ansprüche 1 bis 3, wobei das nicht kristallisierte Metallsulfat in Schritt iv. mit einem Sulfidierungsmittel bei einer Temperatur zwischen 40°C und 80°C umgesetzt wird.

5. Verfahren nach einem der Ansprüche 1 bis 4, wobei das nicht kristallisierte Metallsulfat in Schritt iv. mit einem Sulfidierungsmittel bei atmosphärischem Druck umgesetzt wird.

6. Verfahren nach einem der Ansprüche 1 bis 5, wobei mindestens ein Teil des nicht kristallisierten Metallsulfats in Schritt iv. mit einem Sulfidierungsmittel in einem wässrigen Medium bei einem pH-Wert zwischen 1,5 und 10 umgesetzt wird.

7. Verfahren nach Anspruch 6, wobei dem wässrigen Medium in Schritt iv. Schwefelsäure zugegeben wird.

8. Verfahren nach einem der Ansprüche 1 bis 7, wobei der Grad an Verunreinigungen in der wässrigen Metallsulfatlösung vor Schritt ii. durch Ausfällung, Ionenaustausch und/oder Extraktion von Verunreinigungen aus der wässrigen Metallsulfatlösung reduziert wird.

9. Verfahren nach einem der Ansprüche 1 bis 8, wobei der feste metallhaltige Eintrag in Schritt iv. Ni und/oder Co in einer Menge von 5 bis 75 Gew.-%, bezogen auf das Gesamtgewicht des festen metallhaltigen Eintrags, umfasst.

10. Verfahren nach einem der Ansprüche 1 bis 9, wobei Ni und/oder Co in dem festen metallhaltigen Eintrag in Schritt iv. als ein Carbonat, ein Hydroxycarbonat, ein Sulfat, ein Phosphat, ein Hydroxid und/oder ein Oxid umfasst sind.

11. Verfahren nach einem der Ansprüche 1 bis 10, wobei der feste metallhaltige Eintrag in Schritt iv. Mn in einer Menge von 1 bis 15 Gew.-%, bezogen auf das Gesamtgewicht des festen metallhaltigen Eintrags, umfasst.

12. Verfahren nach einem der Ansprüche 1 bis 11, wobei der feste metallhaltige Eintrag in Schritt iv. Mg in einer Menge von 0,1 bis 10 Gew.-%, bezogen auf das Gesamtgewicht des festen metallhaltigen Eintrags, umfasst.

13. Verfahren nach einem der Ansprüche 1 bis 12, wobei der feste metallhaltige Eintrag in Schritt iv. Al in einer Menge von 0,01 bis 2,00 Gew.-%, bezogen auf das Gesamtgewicht des festen metallhaltigen Eintrags, umfasst.

14. Verfahren nach einem der Ansprüche 1 bis 13, wobei der feste metallhaltige Eintrag in Schritt iv. ferner Cu in einer Menge von 0,01 bis 0,20 Gew.-%, bezogen auf das Gesamtgewicht des festen metallhaltigen Eintrags, und/oder Zn in einer Menge von 0,2 bis 1,0 Gew.-%, bezogen auf das Gesamtgewicht des festen metallhaltigen Eintrags, umfasst.

15. Verfahren nach einem der Ansprüche 1 bis 14, wobei der feste metallhaltige Eintrag in Schritt iv. ein Pulver mit einer durchschnittlichen Teilchengröße D50 zwischen 0,1 und 100 µm, ermittelt gemäß ASTM B822-97, ist.

## Revendications

1. Procédé pour générer un sulfure métallique comprenant du nickel et/ou du cobalt, ledit procédé comprenant les étapes de :
i. la formation d'une solution aqueuse de sulfate métallique par réaction d'acide sulfurique avec une charge de matière première comprenant du nickel et/ou du cobalt dans de l'eau ;
ii. la cristallisation dudit sulfate métallique à partir de ladite solution aqueuse de sulfate métallique pour former un sulfate métallique cristallisé dans une liqueur mère, la liqueur mère comprenant un sulfate métallique non cristallisé ;
iii. la séparation dudit sulfate métallique cristallisé de ladite liqueur mère ;
iv. la réaction de l'au moins une partie dudit sulfate métallique non cristallisé avec un agent de sulfuration dans un milieu aqueux acide, obtenant ainsi une suspension consistant en une phase solide comprenant un précipité de sulfure métallique et une phase aqueuse comprenant une ou plusieurs impuretés et de l'acide sulfurique ; et
v. la séparation de ladite phase solide et de ladite phase aqueuse, obtenant ainsi une phase solide comprenant un sulfure métallique et une phase aqueuse,
moyennant quoi ledit milieu aqueux dans l'étape iv. comprend en outre une charge solide contenant un métal comprenant un composé de nickel et/ou un composé de cobalt.

2. Procédé selon la revendication 1, comprenant en outre l'étape consistant à ajouter un sel basique de Li, Na, K, Ca, Mg, Al, Fe, B, Mn, W et/ou U audit milieu aqueux dans l'étape iv.

3. Procédé selon la revendication 1 ou 2, dans lequel ledit précipité de sulfure métallique obtenu dans l'étape iv. est ensuite lixivié avec un acide et/ou avec un agent oxydant pour régénérer le sulfure d'hydrogène, et dans lequel le sulfure d'hydrogène régénéré est utilisé dans l'étape iv.

4. Procédé selon l'une quelconque des revendications 1 à 3, dans lequel ledit sulfate métallique non cristallisé est mis à réagir avec un agent de sulfuration dans l'étape iv. à une température comprise entre 40°C et 80°C.

5. Procédé selon l'une quelconque des revendications 1 à 4, dans lequel ledit sulfate métallique non cristallisé est mis à réagir avec un agent de sulfuration dans l'étape iv. à la pression atmosphérique.

6. Procédé selon l'une quelconque des revendications 1 à 5, dans lequel l'au moins une partie dudit sulfate métallique non cristallisé est mise à réagir avec un agent de sulfuration dans l'étape iv. dans un milieu aqueux à un pH compris entre 1,5 et 10.

7. Procédé selon la revendication 6, dans lequel de l'acide sulfurique est ajouté dans l'étape iv. audit milieu aqueux.

8. Procédé selon l'une quelconque des revendications 1 à 7, dans lequel, avant l'étape ii, la quantité d'impuretés dans ladite solution aqueuse de sulfate métallique est réduite par précipitation, échange d'ions et/ou extraction d'impuretés de ladite solution aqueuse de sulfate métallique.

9. Procédé selon l'une quelconque des revendications 1 à 8, dans lequel ladite charge solide contenant un métal dans l'étape iv. comprend Ni et/ou Co en une quantité de 5 à 75 % en poids, par rapport au poids total de ladite charge solide contenant un métal.

10. Procédé selon l'une quelconque des revendications 1 à 9, dans lequel Ni et/ou Co dans ladite charge solide contenant un métal dans l'étape iv. sont compris sous la forme d'un carbonate, d'un hydroxycarbonate, d'un sulfate, d'un phosphate, d'un hydroxyde et/ou d'un oxyde.

11. Procédé selon l'une quelconque des revendications 1 à 10, dans lequel ladite charge solide contenant un métal dans l'étape iv. comprend Mn en une quantité de 1 à 15 % en poids, par rapport au poids total de ladite charge solide contenant un métal.

12. Procédé selon l'une quelconque des revendications 1 à 11, dans lequel ladite charge solide contenant un métal dans l'étape iv. comprend du Mg en une quantité de 0,1 à 10 % en poids, par rapport au poids total de ladite charge solide contenant un métal.

13. Procédé selon l'une quelconque des revendications 1 à 12, dans lequel ladite charge solide contenant un métal dans l'étape iv. comprend Al en une quantité de 0,01 à 2,00 % en poids, par rapport au poids total de ladite charge solide contenant un métal.

14. Procédé selon l'une quelconque des revendications 1 à 13, dans lequel ladite charge solide contenant un métal dans l'étape iv comprend en outre du Cu en une quantité de 0,01 à 0,20 % en poids, par rapport au poids total de ladite charge solide contenant un métal, et/ou du Zn en une quantité de 0,2 à 1,0 % en poids, par rapport au poids total de ladite charge solide contenant un métal.

15. Procédé selon l'une quelconque des revendications 1 à 14, dans lequel ladite charge solide contenant un métal à l'étape iv. est une poudre ayant une taille moyenne de particule D50 comprise entre 0,1 et 100 µm, telle que déterminée selon ASTM B822-97.
